# FASCICULE DE BREVET EUROPEEN

(11) **EP 4 031 092 B1**
(45) Date de publication et mention de la délivrance du brevet: **25.12.2024**
(21) Numéro de dépôt: 20785549.5
(22) Date de dépôt: 18.09.2020
(51) Int. Cl.: A61H 99/00, G01L 5/166, G01L 5/22, A61H 3/02, A61H 3/04

(54) **APPAREIL D'ASSISTANCE À LA MARCHE MOTORISÉ, ET PROCÉDÉ DE COMMANDE DUDIT APPAREIL D'ASSISTANCE PAR UNE POIGNÉE ÉLECTRONIQUE**
MOTORISIERTE VORRICHTUNG ZUR UNTERSTÜTZUNG BEIM GEHEN UND VERFAHREN ZUR STEUERUNG DIESER HILFSVORRICHTUNG MIT EINEM ELEKTRONISCHEN HANDGRIFF
MOTORISED APPARATUS FOR ASSISTING WITH WALKING, AND METHOD FOR CONTROLLING SAID ASSISTING APPARATUS WITH AN ELECTRONIC HANDLE

(30) Priorité: 18.09.2019 FR 1910306
(43) Date de publication de la demande: 27.07.2022
(73) Titulaire: ATEK, 33360 Latresne (FR)
(72) Inventeur: PASQUI, Viviane, 78220 Viroflay (FR); MARTINELLI, Pascal, 92330 Sceaux (FR)
(74) Mandataire: Bringer IP
(86) Numéro de dépôt international: PCT/FR2020/051630
(87) Numéro de publication internationale: WO 2021/053310

(56) Documents cités:
- WO-A1-93/04348
- WO-A1-95/03527
- CN-A- 106 166 370
- DE-A1- 10 334 126
- JP-A- H05 168 662
- SHISHEHGAR ET AL.: "A systematic review of research into how robotic technology can help older people", SMART HEALTH, vol. 7, 8 June 2018 (2018-06-08), pages 1 - 18
- WHITE DK ET AL.: "Trajectories of gait speed predict mortality in well-functioning older adults: the Health, Aging and Body Composition study", J GERONTOL A BIOL SCI MED SCI, vol. 68, no. 4, April 2013 (2013-04-01), pages 456 - 64
- MORRIS A ET AL: "A robotic walker that provides guidance", PROCEEDINGS / 2003 IEEE INTERNATIONAL CONFERENCE ON ROBOTICS AND AUTOMATION : SEPTEMBER 14 - 19, 2003, THE GRAND HOTEL, TAIPEI, TAIWAN; [PROCEEDINGS OF THE IEEE INTERNATIONAL CONFERENCE ON ROBOTICS AND AUTOMATION], IEEE SERVICE CENTER, PISCATAWAY, NJ, vol. 1, 14 September 2003 (2003-09-14), pages 25 - 30, XP010666753, ISBN: 978-0-7803-7736-3, DOI: 10.1109/ROBOT.2003.1241568
- FEI SHI ET AL: "Based on force sensing-controlled human-machine interaction system for walking assistant robot", INTELLIGENT CONTROL AND AUTOMATION (WCICA), 2010 8TH WORLD CONGRESS ON, IEEE, PISCATAWAY, NJ, USA, 7 July 2010 (2010-07-07), pages 6528 - 6533, XP031736671, ISBN: 978-1-4244-6712-9
- A.J. RENTSCHLER ET AL.: "Clinical Evaluation of Guido robotic walker", JOURNAL OF REHABILITATION RESEARCH AND DEVELOPMENT, vol. 45, no. 9, 2008, pages 1281 - 1294
- A FRIZERA-NETO ET AL.: "Empowering and Assisting Natural Human Mobility: The Simbiosis Walker", INT J ADV ROBOTIC SY, vol. 8, no. 3, 2011, XP055848233, DOI: 10.5772/10666
- W. ZHOU ET AL.: "An intent-based control approach for an intelligent mobility aids", SECOND INTERNATIONAL ASIA CONFERENCE ON INFORMATICS IN CONTROL, AUTOMATION AND ROBOTICS, 2010, pages 54 - 58
- DATABASE INSPEC [online] THE INSTITUTION OF ELECTRICAL ENGINEERS, STEVENAGE, GB; June 2018 (2018-06-01), SHISHEHGAR M ET AL: "A systematic review of research into how robotic technology can help older people", Database accession no. 18572138
- SMART HEALTH ELSEVIER B.V. NETHERLANDS, vol. 7-8, pages 1 - 18, ISSN: 2352-6483, DOI: 10.1016/J.SMHL.2018.03.002

## Description

L'invention s'intéresse au domaine des poignées électroniques, et plus particulièrement des poignées électroniques configurées pour mesurer une ou plusieurs composantes d'une force lui étant appliquée et pouvant être utilisées notamment en robotique pour le contrôle de dispositifs motorisés. L'invention concerne en particulier un appareil d'assistance à la marche équipé d'une telle poignée électronique, ledit appareil étant par exemple configuré de façon à ce que ses déplacements puissent être contrôlés selon la ou les forces appliquées à la poignée. L'invention concerne aussi un procédé de contrôle d'un appareil d'assistance à la marche, ledit procédé mettant en oeuvre une telle poignée électronique.

### [Art antérieur]

Les poignées électroniques sont utilisées pour de nombreuses applications de la vie courante et dans l'industrie. Elles peuvent par exemple être utilisées pour le contrôle de dispositifs robotisés tels que des bras robotisés ou des dispositifs motorisés mobiles.

Il a été développé plusieurs types de poignées électroniques capables de déterminer les forces appliquées à la poignée selon un ou plusieurs degrés de liberté de mouvement de translation ou de rotation. Pour cela les poignées électronique comportent généralement des capteurs d'efforts tels que des capteurs de position, de couple, de force ou de pression. Les capteurs d'efforts ont été largement employés car d'une part ils permettent la mesure directe de l'intention de mouvement de l'utilisateur et d'autres part, ils offrent un moyen convivial et intuitif de piloter le robot ou dispositif mobile.

La population mondiale vieillissante augmente rapidement et le pourcentage d'adultes âgés devrait passer de 10% en 2000 à 24% d'ici 2030 (Shishehgar et al. A systematic review of research into how robotic technology can help older people. Smart Health. Volumes 7-8, June 2018, Pages 1-18). Les besoins de prise en charge des personnes âgées vont donc augmenter alors que ceux-ci sont déjà élevés, en particulier dans des pays tels que le Japon, les États-Unis, le Canada, l'Australie et en Europe. Or, la vitesse de marche est un marqueur significatif des conséquences néfastes du vieillissement et il a été montré que le risque de mortalité était accru de 90% chez les adultes dont la vitesse de marche avait fortement diminué en l'espace de deux ans seulement, tandis qu'une vitesse de marche réduite pouvait également permettre de prévoir une hospitalisation et une invalidité futures (White DK et al. Trajectories of gait speed predict mortality in well-functioning older adults: the Health, Aging and Body Composition study. J Gerontol A Biol Sci Med Sci. 2013. April;68(4):456-64.)

La prise en charge de la personne avec troubles de la marche et de l'équilibre se fait alors sur trois volets : la rééducation, l'aménagement du lieu de vie et l'utilisation d'aides techniques. Les appareils d'assistance à la marche ou aides techniques pour la marche permettent à une personne atteinte de troubles de la marche et/ou de l'équilibre de retrouver une certaine autonomie. Ces troubles ont des origines variées et peuvent affecter tous les âges, mais sont fréquents dans le cadre du vieillissement physiologique.

Néanmoins, les aides techniques à la marche (e.g. cane, cadre de marche, déambulateur) restent encore rudimentaires. Leur mauvaise utilisation voire leur inutilisation et l'aggravation des troubles conduisent à la mise au fauteuil roulant. Une alternative est l'utilisation d'aides techniques à la marche robotisées, qui par leur motorisation et par l'interprétation des données capteurs facilitent et sécurisent l'utilisation.

Dès lors que l'assistance est motorisée il faut agir sur les moteurs pour piloter l'aide technique à la marche. Un moyen de réaliser une Interface Homme-Machine est la boîte à boutons. L'activation des fonctions au travers d'une boîte à boutons, aussi simple soit elle, est une tâche supplémentaire difficile à exécuter, notamment conjointement à la marche, pour des personnes âgées fragiles.

Or, les aides à la marche comportent systématiquement des poignées sur lesquelles les utilisateurs prennent appui pour préserver leur équilibre. Les poignées sont donc naturellement les éléments du robot en contact avec son utilisateur. Or, les informations recueillies dans le contact main-poignée peuvent servir à commander le robot, les poignées électroniques devenant ainsi des interfaces Homme-Machine.

Se basant sur ce concept, il a été proposé des appareils d'assistance à la marche équipés de poignées électroniques comportant des capteurs de forces unidirectionnels (dans la longueur de la poignée) utilisant la technologie FSR (« Force Sensing Resistors » en terminologie anglosaxonne) (A.C. Morris et al. A robotic walker that provides guidance, in: Proceedings of the 2003 IEEE Conférence on Robotics and Automation, 2003, pp. 25-30 ; F. Shi et al. Based on force sensing-controlled human-machine interaction system for walking assistant robot, in: Proceedings of the 8th World Congress on Intelligent Control and Automation, Jinan, China,2010, pp. 6528-6533).

Il a également été proposé des potentiomètres pour déterminer la direction de déplacement prévue (A.J. Rentschler et al. Clinical évaluation of Guido robotic walker, Journal of Réhabilitation Research and Development 45(9) (2008) 1281-1294) ainsi que des capteurs d'efforts de type jauges d'extensométrie pour instrumenter les poignées de déambulateurs (A Frizera-Neto et al. Empowering and Assisting Natural Human Mobility: The Simbiosis Walker, Int J Adv Robotic Sy, 2011, Vol. 8, No. 3, Special Issue Assistive Robotics; W. Zhou et al. An intent-based control approach for an intelligent mobility aids, in: second International Asia Conférence on Informatics in Control, Automation and Robotics, 2010, pp. 54-58)
Néanmoins, les capteurs de forces ou d'efforts utilisés jusqu'à présent dans ces poignées électroniques sont des dispositifs coûteux.

CN106166370 décrit un appareil d'assistance à la marche comportant un moteur et une poignée électronique étant agencée de façon à permettre la mesure d'au moins deux composantes d'une force lui étant appliquée.

Ainsi, il existe un besoin pour une poignée électronique capable de détecter l'application d'une force supérieure à 15 newtons tout en n'intégrant pas les capteurs couteux et volumineux de l'art antérieur.

### [Problème technique]

L'invention a donc pour but de remédier aux inconvénients de l'art antérieur. En particulier, l'invention a pour but de proposer une poignée électronique capable de mesure au moins une composante d'une force lui étant appliquée et cela à partir de composant de mesure simple, robuste et peu coûteux.

L'invention a en outre pour but de proposer un appareil d'assistance à la marche intégrant une telle poignée, ledit appareil d'assistance à la marche pouvant être contrôlé intuitivement à partir des données générées par la poignée électronique. En outre, l'invention a pour but de proposer un procédé de contrôle d'un tel appareil d'assistance à la marche à partir des données générées.

### [Brève description de l'invention]

A cet effet, l'invention porte sur un appareil d'assistance à la marche selon la revendication 1 et un procédé de contrôle d'un tel appareil d'assistance à la marche selon la revendication 14.

D'autres avantages et caractéristiques de l'invention apparaitront à la lecture de la description suivante donnée à titre d'exemple illustratif et non limitatif, en référence aux Figures annexées :
La figure 1 représente une illustration d'une vue en perspective d'une poignée électronique ne faisant pas partie de l'invention. L'enveloppe extérieure ayant été mise en transparence de façon à permettre une visualisation de l'intérieur de la poignée.
La figure 2 représente une illustration d'une vue de côté d'une coupe longitudinale selon un axe z d'une ne faisant pas partie de l'invention.
La figure 3 représente une illustration d'une vue de dessus d'une coupe longitudinale selon un axe y d'une poignée ne faisant pas partie de l'invention.
La figure 4 représente une courbe d'intensité lumineuse reçue par le récepteur d'une cellule photoélectrique en fonction du déplacement d'un élément d'obturation.
La figure 5 représente une illustration d'une vue en perspective d'une poignée ne faisant pas partie de l'invention. L'enveloppe extérieure a été omise.
La figure 6 représente une illustration d'une vue de côté d'une coupe longitudinale selon un axe z d'une poignée ne faisant pas partie de l'invention.
La figure 7 représente une illustration d'une vue de face de la pièce centrale d'une poignée selon l'invention.
La figure 8 représente un schéma illustratif d'un procédé ne faisant pas partie de l'invention.

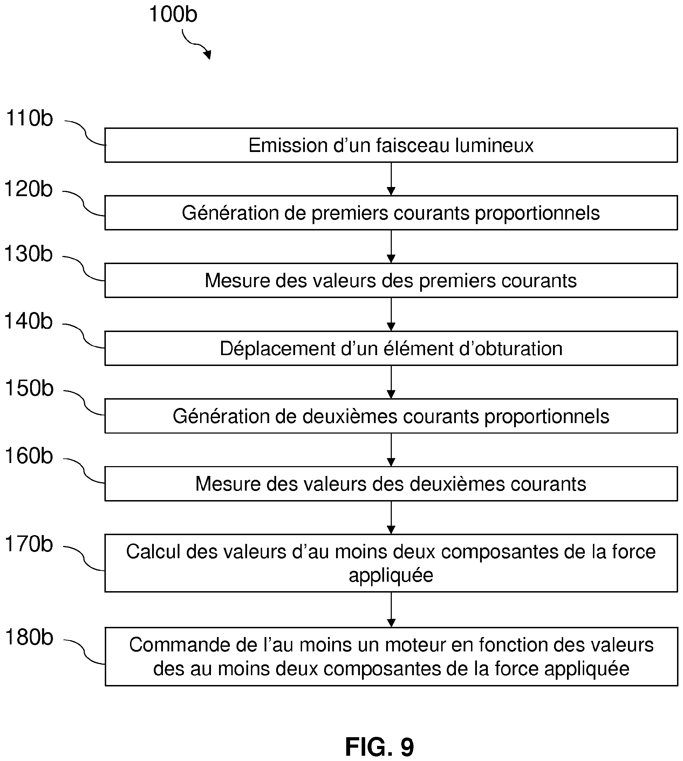

La figure 9 représente un schéma illustratif d'un procédé selon un mode de réalisation de l'invention dans lequel une poignée électronique comporte deux cellules photoélectrique.

Des aspects de la présente invention sont décrits en référence à des organigrammes et / ou à des schémas fonctionnels de procédés ou d'appareils (systèmes) selon des modes de réalisation de l'invention.

Sur les figures, les organigrammes et les schémas fonctionnels illustrent l'architecture, la fonctionnalité et le fonctionnement d'implémentations possibles de systèmes et de procédés selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées.

### [Description de l'invention]

Dans la suite de la description, l'expression « **poignée électronique** » correspond par exemple à un dispositif permettant de soutenir le poids d'un utilisateur, agencé pour accueillir une main dudit utilisateur et comprenant en son sein un ou plusieurs capteurs agencés de façon à permettre une mesure d'une force.

Le terme « **Force** » au sens de l'invention correspond à une action mécanique exercée par un utilisateur sur une surface et en particulier sur la poignée électronique. Ainsi, une « **force appliquée** » correspond au sens de l'invention à un utilisateur exerçant une pression sur la surface extérieure de ladite poignée électronique.

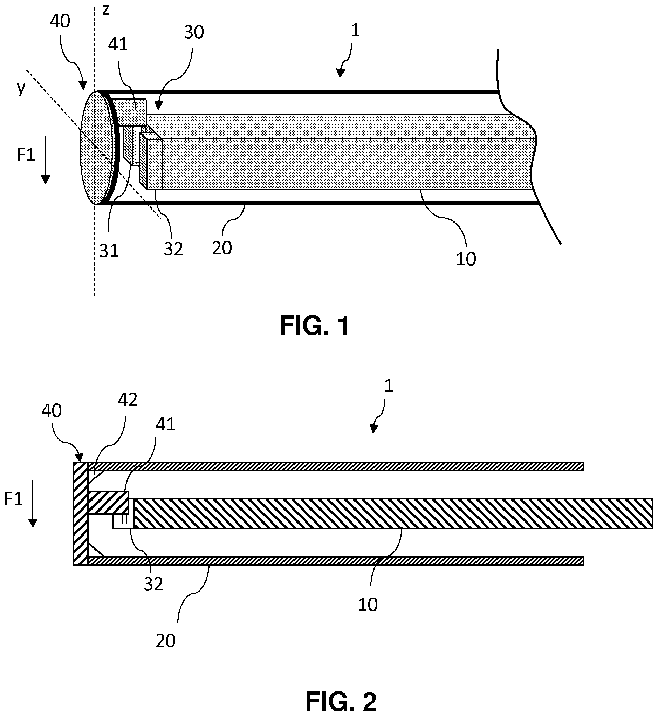

L'expression « **composante d'une force** » correspond à une projection d'une action mécanique dans une direction. Une « **première composante** » correspond ainsi par exemple à une projection d'une force selon un axe Z représenté par un axe orthogonal à l'axe longitudinal de la poignée électronique. Une « **deuxième composante** » correspond ainsi à une projection d'une force selon un axe X, correspondant à l'axe longitudinal de la poignée électronique, notamment représentés en lien avec la figure 1. Dans le cadre de la présente invention, au moins une composante d'une force est considérée, de préférence au moins deux composantes sont considérées et de façon plus préférée seulement deux composantes d'une force sont considérées.

Le terme « **fixé »** correspond à la solidarisation de deux entités distinctes l'une par rapport à l'autre. Ainsi, deux entités peuvent présenter une fixation amovible ou non amovible.

Le terme « **amovible** » correspond selon l'invention à la capacité à être détachée, enlevée ou démontée aisément sans avoir à détruire des moyens de fixation soit parce qu'il n'y a pas de moyen de fixation soit parce que les moyens de fixation sont aisément et rapidement démontables (e.g. encoche, vis, languette, ergot, clips). Par exemple, par amovible, il faut comprendre que l'objet n'est pas fixé par soudure ou par un autre moyen non prévu pour permettre de détacher l'objet.

Une fixation « **non amovible** » correspond selon l'invention à la capacité de ne pas être détachée, enlevée ou démontée sans avoir à détruire des moyens de fixation soit parce qu'il n'y a pas de moyen de fixation soit parce que les moyens de fixation ne sont pas aisément et rapidement démontables. Par exemple, par non-amovible, il faut comprendre que l'objet est fixé par soudure ou plus généralement par tout moyen de solidarisation irréversible.

Le terme « **tubulaire** » correspond à un élément sensiblement longiligne formant un conduit dont la lumière est enceinte par une paroi dudit conduit. Une telle lumière désigne ainsi un espace intérieur creux circonscrit par la paroi du conduit.

Lorsque le terme « **sensiblement** » est associé à une valeur particulière, il faut comprendre une valeur variant de moins de 30 % par rapport à la valeur comparée, de préférence de moins de 20 %, de façon encore plus préférée de moins de 10 %. Lorsque sensiblement identique est utilisée pour comparer des formes alors la forme vectorisée varie de moins de 30 % par rapport à la forme vectorisée comparée, de préférence de moins de 20 %, de façon encore plus préférée de moins de 10 %.

On entend par « **polymère** », soit un copolymère soit un homopolymère. Un « copolymère » est un polymère regroupant plusieurs unités monomères différentes et un « homopolymère » est un polymère regroupant des unités monomères identiques. Un polymère peut par exemple être un polymère thermoplastique ou thermodurcissable.

On entend par « **polymère thermoplastique** » ou « **thermoplastique** », un polymère qui, de manière répétée, peut être ramolli ou fondu sous l'action de la chaleur et qui adopte de nouvelles formes par application de chaleur et de pression. Des exemples de thermoplastiques sont, par exemple : le polyéthylène haute densité (PEHD), le polyéthylène téréphtalate (PET), le polychlorure de vinyle (PVC), le Polystyrène (PS) ou l'acrylonitrile butadiène styrène (ABS).

On entend par « **polymère thermodurcissable** »_une matière plastique qui se transforme de manière irréversible par polymérisation en un réseau polymère insoluble. Une fois la forme du polymère thermodurcissable fixée et refroidie, elle ne peut plus être modifiée sous l'action de la chaleur. Des polymères thermodurcissables sont par exemple : les polyesters insaturés, les polyimides, les polyuréthanes ou les esters vinyliques qui peuvent être époxydique ou phénolique.

On entend par « **couplé** » au sens de l'invention, connecté, directement ou indirectement avec un ou plusieurs éléments intermédiaires. Deux éléments peuvent être couplés mécaniquement, électriquement ou liés par un canal de communication.

On entend par « **traiter** », « **calculer** », « **exécuter** », « **déterminer** », « **afficher** », **« extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

Au sens de l'invention le terme « **processeur** » désigne au moins un circuit matériel configuré pour exécuter des instructions contenues dans le code de programme. Le circuit matériel peut être un circuit intégré. Des exemples d'un processeur comprennent, sans s'y limiter, une unité de traitement central (CPU), un processeur de réseau, un processeur de vecteur, un processeur de signal numérique (DSP), un réseau de grille programmable sur le terrain (FPGA), un ensemble logique programmable (PLA), un circuit intégré spécifique à l'application (ASIC), un circuit logique programmable et un contrôleur.

L'expression « **interface homme-machine** » au sens de l'invention correspond à tout élément permettant à un être humain de communiquer avec un dispositif électronique.

On entend par « **motorisé** » au sens de l'invention, un appareil ou dispositif équipé de tout moyen adapté connu (e.g. moteur) permettant de générer un déplacement de tout ou partie du dispositif auquel ledit moyen est associé.

Dans la suite de la description, les mêmes références sont utilisées pour désigner les mêmes éléments.

Les poignées électroniques dédiées à l'analyse des forces qu'elles subissent sont généralement équipées de capteur de force, de capteurs de couple, de capteur de pression, de jauge d'extensométrie, de technologie de type piézoélectrique ou encore de simples capteurs à boutons.

En particulier, ces poignées sont intégrées à des appareils d'assistance à la marche et peuvent permettre de commander un déplacement. Néanmoins, de tels capteurs sont généralement trop couteux, fragiles et/ou peu précis.

La présente invention propose pour palier à cela par des poignées capables de détecter des forces aussi faibles que 15 N, soit environ 1,5 kg, et cela à partir de capteurs peu couteux et robustes. De plus, la sensibilité des poignées électroniques selon l'invention peut encore être améliorée en fonction des matériaux et des agencements utilisés pour atteindre une sensibilité inférieure à 10 N voir inférieure à 1 N.

En outre, les poignées électroniques selon l'invention ne présentent pas une dérive de mesure dans le temps et ne nécessite pas, contrairement à d'autre capteurs tels que les jauges d'extensométrie, de recalibrations récurrentes.

Afin de mesurer ces forces, un couplage entre une cellule photoélectrique et un élément d'obturation est utilisé. Une cellule photoélectrique peut en particulier correspondre à un capteur constitué d'un émetteur d'infrarouge et d'un récepteur placé en face. La zone d'émission est donc une ligne de lumière infrarouge. Lorsqu'un élément d'obturation tel qu'un drapeau pénètre entre l'émetteur et le récepteur la quantité de lumière reçue par le récepteur est de plus en plus faible. La mesure du courant en sortie du capteur est proportionnelle à la quantité de lumière mesurée et donc à la distance de pénétration du drapeau. Cette distance peut ensuite être ramenée à la force, appliquée à la poignée, qui a entraîné le déplacement. Ainsi, des poignées électroniques selon l'invention vont comporter un élément capable de subir une déformation élastique proportionnelle à la force appliquée à la poignée, un tel élément pourra par exemple correspondre à une partie d'une pièce centrale de la poignée électronique ou encore à une partie au moins de l'enveloppe extérieure de la poignée.

Les poignées électroniques selon l'invention peuvent alors être utilisées pour commander un ou plusieurs moteurs, tels que des moteurs d'un dispositif motorisé tel qu'un dispositif d'assistance à la marche.

Ainsi, selon un premier aspect, l'invention porte sur **une poignée électronique 1 agencée de façon à permettre la mesure d'au moins une composante d'une force lui étant appliquée.** Comme cela est illustré à la **figure 1** et la **figure 2****,** une poignée selon l'invention comporte une pièce centrale 10 et une enveloppe extérieure 20.

**La pièce centrale 10** d'une poignée électronique 1 selon l'invention peut présenter une forme sensiblement cylindrique. Néanmoins, comme cela est visible sur l'illustration de la figure 1, de façon préférée, la pièce centrale comporte au moins une portion présentant une section comportant une arête. Elle présente par exemple une section en forme de polygone.

La pièce centrale 10 est réalisée avec un matériau présentant de préférence un module de Young au moins égal à 60 GPa, par exemple un module de Young au moins égal à 175 GPa, de préférence au moins égal à 200 GPa. Cela permet de conférer à la pièce centrale 10 une rigidité adaptée à son utilisation dans la poignée électronique selon l'invention. La pièce centrale 10 peut être constituée de métal, d'un alliage métallique, de polymère ou d'un ensemble composite. De façon préférée, la pièce centrale 10 est constituée d'acier inoxydable.

La pièce centrale 10 présente de préférence une longueur minimale de 300 mm et maximale de 500 mm.

**L'enveloppe extérieure 20** d'une poignée électronique 1 selon l'invention peut présenter une forme sensiblement tubulaire, de préférence tubulaire. Elle peut comporter au moins une portion présentant une section comportant une arête. Néanmoins de façon préférée, elle présente une section de forme sensiblement ellipsoïdale et de façon plus préférée sensiblement circulaire. L'enveloppe extérieure 20 est réalisée avec un matériau présentant de préférence un module de Young inférieur à 200 GPa, de façon plus préférée inférieur à 150 GPa et de façon encore plus préférée inférieur à 100 GPa. Une telle constitution et l'existence d'une élasticité au niveau de l'enveloppe extérieure 20 permet d'améliorer les performances de la poignée électronique selon l'invention.

L'enveloppe extérieure 20 peut être constituée de métal, d'un alliage métallique, de polymère ou d'un ensemble composite. De façon préférée, l'enveloppe extérieure 20 est constituée d'aluminium. De façon plus préférée, l'enveloppe extérieure 20 est constituée de polymère ou d'un ensemble composite.

L'enveloppe extérieure 20 présente de préférence une longueur minimale de 100 mm et maximale de 500 mm. En outre, l'enveloppe extérieure 20 peut présenter un diamètre extérieur compris entre 20 mm et 50 mm et une épaisseur de paroi comprise entre 1 mm et 3 mm.

Dans un mode de réalisation, l'enveloppe extérieure 20 est agencée de façon à pouvoir, sous l'effet d'une force comportant une composante verticale, se déplacer d'au moins un dixième de millimètre en translation par rapport à un axe orthogonal à un axe longitudinal de la pièce centrale 10.

Dans un autre mode de réalisation et de façon préférée, l'enveloppe extérieure 20 est agencée de façon à ne pas se déplacer suivant la verticale par rapport à pièce centrale 10 sous l'effet d'une force de puissance adaptée à la commande d'un dispositif motorisé tel qu'un appareil d'assistance à la marche. En particulier, dans ce cas, la pièce centrale peut également être agencée de façon à ce qu'au moins une partie de la pièce centrale puisse, sous l'effet d'une force comportant une composante verticale, se déplacer d'au moins un dixième de millimètre en translation par rapport à un axe orthogonal à un axe longitudinal de la pièce centrale 10. De façon préférée, la pièce centrale comportera des zones aptes à se déformées sous l'effet d'une force de puissance adaptée à la commande d'un dispositif motorisé entrainant le déplacement d'une partie de la pièce centrale par rapport à une autre partie de la pièce centrale.

Un déplacement d'au moins un dixième de millimètre peut correspondre de préférence à un déplacement d'au moins 0,10 millimètre à 1 millimètre.

En outre, l'enveloppe extérieure 20 peut être agencée de façon à pouvoir, sous l'effet d'une force comportant une composante horizontale, se déplacer d'au moins un dixième de millimètre en translation par rapport à un axe longitudinal de la pièce centrale 10.

La pièce centrale 10 peut également être agencée de façon à ce qu'au moins une partie de la pièce centrale puisse, sous l'effet d'une force comportant une composante horizontale, se déplacer d'au moins un dixième de millimètre en translation par rapport à un axe longitudinal de la pièce centrale 10.

Cela est possible notamment en l'absence de fixation directe entre l'enveloppe extérieure et la pièce centrale. En outre, la présence de joints capables de déformations élastiques ou encore un arrangement de la pièce centrale permettent également de telles translations. Comme cela sera détaillé par la suite, des éléments de fixation traversant des logements pratiqués dans des extrémités libres 16-1, 16-2 de poutres encastrées 11-2, 11-3 de la pièce centrale 10 peuvent également être utilisés pour coupler l'enveloppe extérieure 20 et la pièce centrale 10.

Une poignée électronique 1 selon l'invention comporte **une première cellule photoélectrique 30**.

Les cellules photoélectriques sont des dispositifs électroniques comportant généralement une diode électroluminescente capable d'émettre des impulsions lumineuses, généralement dans l'infrarouge proche (e.g. 850 nm à 950 nm). Cette lumière est reçue ou non par une photodiode ou un phototransistor en fonction de la présence ou de l'absence d'un objet sur le parcours des impulsions lumineuses. Le courant photoélectrique créé peut être amplifié puis analysé.

Dans le cadre de l'invention, une cellule photoélectrique peut être sélectionnée parmi une cellule photoélectrique de type barrage, de type reflex, de type proximité. En outre, il est possible d'utiliser des fibres optiques pour modifier l'arrangement des cellules photoélectriques dans le cadre de l'invention.

Dans le cadre de l'invention, une cellule photoélectrique est de préférence une cellule photoélectrique de type barrage pour laquelle le barrage est constitué par l'élément d'obturation 40.

De telles cellules photoélectriques peuvent généralement être peu coûteuses mais robustes comparé aux capteurs utilisés habituellement.

La première cellule photoélectrique 30 comporte une première diode 31 apte à émettre un faisceau lumineux. La diode d'une cellule photoélectrique selon l'invention peut correspondre à une diode infrarouge.

En outre, la première cellule photoélectrique 30 comporte un premier récepteur 32 agencé pour recevoir le faisceau lumineux émis par la première diode. De façon préférée et comme cela est illustré à la figure 1, le faisceau lumineux émis par la première diode est dirigé directement vers le premier récepteur 32.

La première cellule photoélectrique 30 est configurée pour générer un courant d'intensité ou de tension proportionnelle à une quantité de photons reçus par le premier récepteur 32. En particulier, c'est le premier récepteur 32 qui en tant que transducteur de lumière va générer une modification d'un courant électrique en réponse au faisceau lumineux incident sur sa surface. Le premier récepteur 32 peut par exemple être un photoconducteur, une photodiode ou un photo transistor.

De façon préférée, une cellule photoélectrique selon l'invention est configurée pour générer un courant électrique dont l'intensité ou la tension sera proportionnelle à la quantité de photons reçue par le récepteur.

En outre, la poignée électronique 1 comporte **un premier élément d'obturation 40** qui est capable de, ou agencé de façon à, modifier la quantité de photons reçus par le premier récepteur 32. En particulier, cette modification de la quantité de photons reçus est fonction de la position du premier élément d'obturation 40 par rapport à la première cellule photoélectrique 30.

Un élément d'obturation 40 au sens de l'invention peut être constitué de métal, d'un alliage métallique, de polymère ou d'un ensemble composite. De façon préférée, l'élément d'obturation 40 est constitué de polymère, de façon plus préférée de polymère thermoplastique.

L'élément d'obturation 40 peut comporter une protubérance 41 agencée de façon à venir se positionner entre la diode 31 et le récepteur 32 de la cellule photoélectrique 30. La protubérance 41 peut être fixée de façon amovible ou non amovible à l'élément d'obturation 40. En outre, en l'absence de protubérance 41, c'est l'élément d'obturation qui vient se loger entre la diode 31 et le récepteur 32.

Il est important que la première cellule photoélectrique 30 et le premier élément d'obturation 40 puissent être mobiles au moins en partie l'un par rapport à l'autre. En effet, c'est notamment le mouvement de l'un par rapport à l'autre, de préférence d'au moins une partie l'un par rapport à l'autre, qui permettra une mesure d'une composante d'une force appliquée à la poignée électronique 1 selon la présente invention. Alternativement, le premier élément d'obturation 40 et la première cellule photoélectrique 30 sont fixés directement ou indirectement sur des parties de la pièce centrale et ces parties peuvent être mobiles l'une par rapport à l'autre.

Ainsi, selon un mode de réalisation non revendiqué illustré aux figures 1 ou 2, parmi la première cellule photoélectrique 30 et le premier élément d'obturation 40, l'un est fixé à l'enveloppe extérieure 20 et l'autre est fixé à la pièce centrale 10. En particulier, si l'un est fixé à l'enveloppe extérieure, il ne sera pas fixé à la pièce centrale et vice versa. La figure 2 présente par exemple des moyens de fixation 42 de l'élément d'obturation 40 à l'enveloppe extérieure 20. La fixation est de préférence une fixation amovible.

En particulier, le positionnement de la première cellule photoélectrique 30 et du premier élément d'obturation 40 sur la pièce centrale ou la fixation de l'élément d'obturation 40 à l'enveloppe extérieure 20 seront réalisée de façon à ce qu'une force appliquée F1 à la poignée électronique 1, si elle est suffisante pour déplacer au moins en partie l'enveloppe extérieure 20 alors elle entrainera une modification de la quantité de photons reçue par le premier récepteur 32. En outre, la position du premier élément d'obturation 40 permettant d'influer sur la quantité de photons reçue par le premier récepteur 32 alors, la modification de la quantité de photons reçue par le premier récepteur 32 sera corrélée, de préférence proportionnelle, à une première composante de la force ayant été appliquée à la poignée électronique 1.

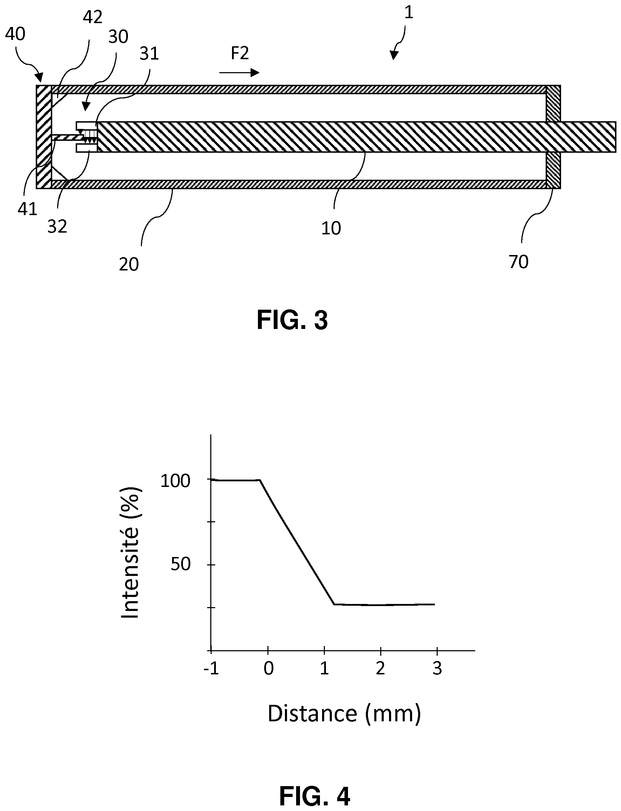

Comme illustré à la **figure 3**, la fixation sera réalisée de façon à ce qu'une force appliquée F2 à la poignée électronique 1, si elle est suffisante pour déplacer au moins en partie l'enveloppe extérieure 20 alors elle entrainera une modification de la quantité de photons reçue par le premier récepteur 32. En outre, la position du premier élément d'obturation 40 permettant d'influer sur la quantité de photons reçue par le premier récepteur 32 alors, la modification de la quantité de photons reçue par le premier récepteur 32 sera corrélée, de préférence proportionnelle, à une deuxième composante de la force ayant été appliquée à la poignée électronique 1. Comme illustré, la poignée peut comporter un élément 70 capable de déformation élastique, par exemple en polymère, de façon à permettre une translation de l'enveloppe extérieure 20 par rapport à la pièce centrale 10.

La poignée peut également comporter une pièce centrale 10 agencée de façon à ce qu'une partie de la pièce centrale 10 se déplace sous l'action d'une force appliquée F1 à la poignée électronique 1, entrainant une modification de la quantité de photons reçue par le premier récepteur 32 et qu'une partie de la pièce centrale 10 se déplace sous l'action d'une force appliquée F2 à la poignée électronique 1, entrainant une modification de la quantité de photons reçue par le deuxième récepteur 52.

Ainsi, la poignée électronique selon la présente invention peut comporter un capteur d'une composante de force verticale ou horizontale passant ou non par une mesure d'un déplacement de l'enveloppe extérieure par rapport à la pièce centrale 10, le déplacement étant causé par une force comportant une composante verticale et/ou une composante horizontale. Ainsi, le déplacement peut concerner une partie seulement de l'enveloppe extérieure et peut se comprendre comme une déformation de l'enveloppe extérieure. De façon préférée, l'enveloppe extérieure 20 se déforme de façon négligeable et subit seulement un déplacement suivant l'horizontale fonction de la force qui lui est appliquée.

Dans un mode de réalisation particulier, la poignée 1 électronique comporte un axe fixe horizontal, par exemple en acier, apte à être lié à un appareil d'assistance à la marche (e.g. déambulateur) et qui sert de référence. Elle comporte également une enveloppe extérieure 20 pouvant prendre la forme d'un tube extérieur qui peut se déplacer, sous l'effet de la composante horizontale de la force, d'un dixième de millimètre en translation par rapport à l'axe central et qui, sous l'effet de la composante verticale de la force, se déforme dans le plan sagittal comme une poutre encastrée. La mesure de cette force peut être réalisée par un processeur par exemple placé dans la poignée 1 électronique ou dans l'appareil d'assistance à la marche.

Comme cela est illustré à la **figure 4**, une cellule photoélectrique telle qu'utilisée dans le cadre de la présente invention est de préférence configurée de façon à pouvoir générer un courant électrique dont l'intensité ou la tension est corrélée, de préférence proportionnelle, à la position d'un élément d'obturation. Ainsi, la modification de la quantité de photons reçue par le récepteur sera proportionnelle à une composante de la force ayant été appliquée à la poignée électronique 1.

Comme illustré sur la figure 4, la relation entre la distance et l'intensité est de préférence linéaire sur au moins 1 mm.

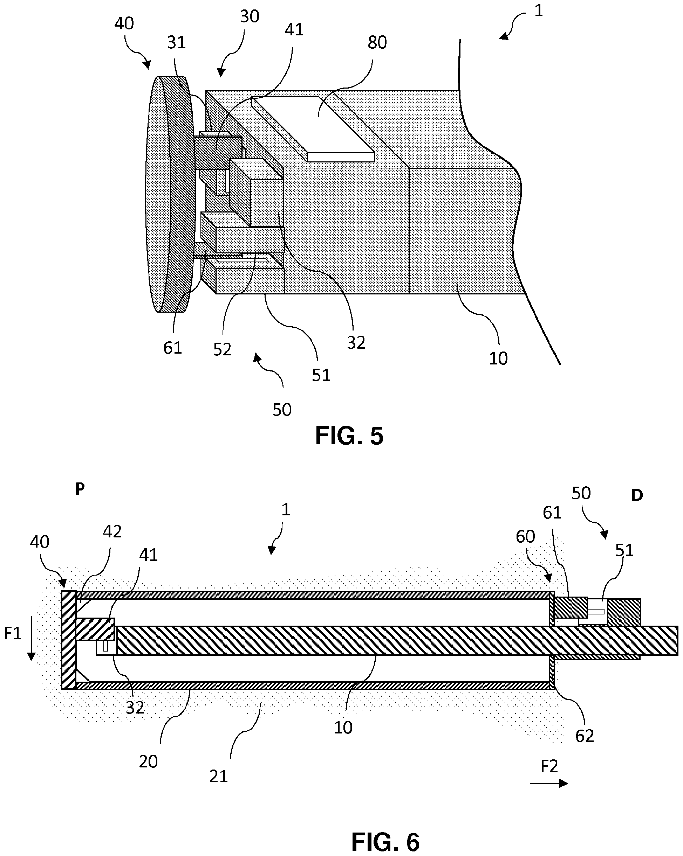

Comme cela est illustré à la **figure 5**, une poignée électronique 1 selon la présente invention peut également comporter au moins une deuxième cellule photoélectrique 50.

Cette deuxième cellule photoélectrique 50 peut partager les mêmes caractéristiques que la première cellule photoélectrique 30 et en particulier ses caractéristiques préférées ou avantageuses.

Comme la première cellule photoélectrique, la deuxième cellule photoélectrique 50 comporte une deuxième diode 51 apte à émettre un faisceau lumineux. Elle comporte également un deuxième récepteur 52 agencé pour recevoir ledit faisceau lumineux. En outre, l'élément d'obturation 40 peut comprendre une seconde protubérance 61 dont un exemple sera présenté plus en détails en lien avec la figure 6.

En outre, la deuxième cellule photoélectrique 50 est agencée de façon à ce qu'une force appliquée à la poignée électronique 1 soit apte à entrainer une modification de la quantité de photons reçue par le deuxième récepteur 52. Généralement, la force appliquée à la poignée électronique 1 sera apte à entrainer une modification de la quantité de photons reçus par le deuxième récepteur 50 si elle est apte à déplacer au moins en partie l'enveloppe extérieure 20. Avantageusement, la modification de la quantité de photons reçue est proportionnelle à une deuxième composante de la force ayant été appliquée à la poignée électronique 1.

Ainsi, la présence d'une deuxième cellule photoélectrique 50 permet de mieux caractériser la force appliquée à la poignée.

Au-delà de la capacité à mesurer une deuxième composante de force, cela permet une calibration de la poignée électronique sans intervention manuelle sur la poignée et son électronique. En effet, un 'zéro' est obtenu lorsque aucune force ne s'applique sur le système et la force mesurée peut correspondre à un pourcentage de déplacement de l'élément d'obturation par exemple par rapport à un déplacement maximum.

Les cellules photoélectrique 30, 50 peuvent être fixées directement à la pièce centrale 10. Comme illustré sur la figure 5, les cellules photoélectrique 30, 50 peuvent être fixées indirectement à la pièce centrale 10. En particulier, un élément intermédiaire 11 peut être utilisé. L'élément intermédiaire 11 est fixé à la pièce centrale tandis que les cellules photoélectrique 30, 50 sont fixées à l'élément intermédiaire 11. Cela peut permettre de fabriquer plus rapidement une poignée selon l'invention et en facilite une éventuelle maintenance.

En outre, une poignée électronique 1 peut également comporter une **carte électronique 80**. Une telle carte électronique 80 pourra être configurée pour mesurer la tension de sortie de la cellule photoélectrique puis la transformer en une donnée numérique. Avantageusement, la carte électronique 80 est configurée pour échantillonner la mesure du courant sur 10 bits, ce qui correspond à 1024 valeurs. Un tel échantillonnage permet une résolution de la mesure de l'ordre du millième de millimètre.

En particulier, la carte électronique 80 est configurée pour mesurer une tension ou une intensité de sortie et l'échantillonner sur au moins 4 bits, de préférence au moins 10 bits.

Considérant la corrélation entre la tension ou l'intensité de sortie et le déplacement en millimètre d'un élément d'obturation par rapport à une cellule photoélectrique d'une part et la corrélation entre le déplacement en millimètre de l'enveloppe extérieure 20 par rapport à la pièce centrale 10 et la force appliquée d'autre part, la carte électronique 80, ou une carte électronique disposée en dehors de la poignée, pourra être configurée pour transformer l'information générée par une cellule photoélectrique en une information sur l'intensité de la force appliquée sur la poignée électronique.

Comme présenté à la **figure 6****,** une poignée électronique 1 peut également comporter un deuxième élément d'obturation 60.

Les mesures de déplacement horizontal et vertical peuvent alors être découplées. Un premier capteur est utilisé pour la déformation de la poignée due à une composante verticale F1 et un deuxième capteur est utilisé pour le déplacement horizontal de la poignée due à une composante horizontale F2. De plus, la présence des deux capteurs permet une calibration automatique (i.e. sans manipulation du capteur).

Ce deuxième élément d'obturation 60 peut partager les mêmes caractéristiques que le premier élément d'obturation 40 et en particulier ses caractéristiques préférées ou avantageuses. Par exemple, le deuxième élément d'obturation 60 peut comporter une protubérance 61 agencée pour couper le faisceau lumineux généré par la deuxième diode 51.

Ainsi, le deuxième élément d'obturation 60 est capable de modifier la quantité de photons reçue par le deuxième récepteur 52. Cette modification est en particulier fonction de sa position par rapport à la deuxième cellule photoélectrique 50.

En outre, le deuxième élément d'obturation 60 peut comporter une membrane 62 ladite membrane 62 étant agencée pour transmettre un déplacement de l'enveloppe extérieure 20, par exemple soumise à une composante de force horizontale, à une protubérance 61. En particulier, la liaison avec l'enveloppe extérieure 20 peut être une lamelle qui se déforme selon la force exercée horizontalement par l'utilisateur. Sur cette lamelle est rigidement fixée une protubérance telle qu'un drapeau qui sert à la mesure. La pièce déformée restant dans sa zone élastique, la déformation est proportionnelle à la force. Alternativement, le deuxième élément d'obturation 60 et la deuxième cellule photoélectrique 50 sont fixés directement ou indirectement sur des parties de la pièce centrale et ces parties peuvent être mobiles l'une par rapport à l'autre. De façon préférée, la pièce centrale est agencée de façon à ce que le deuxième élément d'obturation 60 et la deuxième cellule photoélectrique 50 sont fixés directement ou indirectement sur des parties de la pièce centrale qui peuvent se déplacer indépendamment et des parties de la pièce centrale sur lesquelles sont fixées directement ou indirectement le premier élément d'obturation 40 et la deuxième cellule photoélectrique 50 Avantageusement, la deuxième composante de la force sera perpendiculaire à la première composante de la force.

Ainsi, la poignée électronique 1 peut comporter un capteur pour la déformation de l'enveloppe extérieur 20, et plus largement de la poignée 1, due à une composante horizontale.

Pour cela, la deuxième cellule photoélectrique 50 est de préférence positionnée sensiblement perpendiculairement, de préférence perpendiculairement à la première cellule photoélectrique 30. Plus particulièrement, l'axe d'un faisceau lumineux formé par la première cellule photoélectrique 30 est perpendiculaire à l'axe lumineux formé par la seconde cellule photoélectrique 50.

Dans un mode de réalisation, lorsque la poignée électronique 1 comporte une deuxième cellule photoélectrique 50 et un deuxième élément d'obturation 60, l'un est fixé à l'enveloppe extérieure 20 et l'autre, n'étant pas fixé à l'enveloppe extérieure 20, est fixé à la pièce centrale 10.

Néanmoins, lorsque la poignée électronique 1 comporte une deuxième cellule photoélectrique 50 et un deuxième élément d'obturation 60, avantageusement l'un est fixé à la pièce centrale 10 et l'autre, n'étant pas fixé à la pièce centrale 10, est fixé à une pièce couplée à la poignée électronique. Cette pièce peut par exemple correspondre à un élément de jonction entre la poignée électronique et un élément de châssis.

Alternativement comme cela a été évoqué et comme cela sera détaillé plus avant, les éléments d'obturation et les cellules photoélectriques peuvent être tous fixés à la pièce centrale. Cette fixation peut être directe ou indirecte.

Généralement au moins un élément d'obturation 40,60 est fixé directement ou indirectement à l'enveloppe extérieure 20. Cette fixation peut être une fixation amovible ou non amovible. En outre, dans un mode de réalisation, si un élément d'obturation est fixé à l'enveloppe extérieure 20 alors il ne sera pas fixé à la pièce centrale 10.

De même, au moins une cellule photoélectrique 30,50 est fixée directement ou indirectement à l'enveloppe extérieure 20. Cette fixation peut être une fixation amovible ou non amovible. En outre, si une cellule photoélectrique est fixée à l'enveloppe extérieure alors elle ne sera pas fixée à la pièce centrale 10.

Avantageusement, la ou les cellules photoélectriques 30,50 sont fixées aux extrémités de l'enveloppe extérieure 20. De façon préférée elles sont fixées aux extrémités opposées de l'enveloppe extérieure 20. En particulier, comme illustré à la figure 6, la cellule photoélectrique 30 agencée pour une mesure d'une composante de force verticale F1 est de préférence positionnée dans un quartile proximal P de la poignée électronique 1 tandis que la cellule photoélectrique 50 agencée pour une mesure d'une composante de force horizontale F2 est de préférence positionnée dans un quartile distal D de la poignée électronique 1. Cela permet une amélioration de la précision des mesures et de la sensibilité.

Avantageusement, pour faciliter le déplacement horizontal de l'enveloppe extérieure, des roulements linéaires à billes sont utilisés et une pièce de type guidage linéaire à bille permet de faire la liaison entre l'axe central et le tube extérieur.

L'enveloppe extérieure peut en outre être recouverte d'une forme ergonomique 21 pour faciliter la prise en main de la poignée 1 électronique. La forme ergonomique 21 peut être constituée de polymères ou de tout autre matériau.

Ainsi, l'effort appliqué par une main sur la poignée est modélisé par une force, F, dans le plan sagittal, ayant une composante verticale, F1, et une composante horizontale, F2, dans le sens de la marche de l'utilisateur. Une telle poignée électronique permet de passer outre les compressions réalisées par l'utilisateur lors de l'utilisation de la poignée pour se focaliser sur les actions comportant une force associée à une direction donnée.

Une telle poignée électronique trouve en particulier une application intégrée dans un dispositif motorisé. En effet, une poignée électronique 1 selon l'invention peut être configurée pour commander au moins un moteur d'un dispositif motorisé.

Un dispositif motorisé peut par exemple correspondre à un bras robotisé, un dispositif de levage, ou à un appareil d'assistance à la marche ou appareil ambulatoire.

En particulier, la poignée électronique 1 peut être configurée pour commander un ou plusieurs moteurs du dispositif motorisé seule ou en coopération avec un ou plusieurs processeurs pouvant être positionnés à l'extérieur de la poignée électronique 1. Les commandes moteurs pourront être calculée au niveau de la poignée ou à l'extérieur en fonction notamment des valeurs des deux composantes de force calculées à partir des mesures réalisées par les cellules photoélectriques positionnées dans la poignée. En outre, les commandes moteurs pourront prendre en compte les valeurs des composantes de force calculés à partir des mesures réalisées par les cellules photoélectriques positionnées dans une deuxième poignée et pourront également intégrer des valeurs provenant d'autres capteurs tel qu'un capteur de proximité.

En outre, comme cela a été largement décrit, une telle poignée électronique 1,est avantageusement instrumentée de capteurs mesurant les forces dans la longueur de la poignée et perpendiculairement à la longueur de la poignée de façon décorrélée.

Les tableaux 1 et 2 ci-dessous présentent un relevé du déplacement des éléments d'obturation 40,60 en fonction de la force appliquée à la poignée électronique 1.

**Tableau 1. Relevé du déplacement des éléments d'obturation 40,60 en fonction de la force appliquée à la poignée électronique 1 consistant en une composante verticale.**

| **Force (N)** | **Déplacement du premier élément d'obturation (mm)** | **Tension générée par la première cellule photoélectrique (mV)** |
|---|---|---|
| 30 | 0,05 | 594,5 |
| 60 | 0,1 | 642,8 |
| 90 | 0,13 | 691,5 |
| 120 | 0,17 | 738,4 |
| 150 | 0,24 | 786,3 |
| 180 | 0,3 | 834,3 |

Le tableau 1 montre bien un déplacement du premier élément d'obturation et une tension de sortie de la cellule photoélectrique présentant une fonction sensiblement linéaire par rapport à la force appliquée selon une composante verticale. Au contraire, le deuxième élément d'obturation n'est pas significativement impacté par une composante verticale. Ce déplacement se traduit par une modification linéaire de la tension générée par la première cellule photoélectrique (R² > 0,999 avec une équation du premier degré) alors que la tension générée par la deuxième cellule photoélectrique présente un écart type inférieur à 5 %.

**Tableau 2. Relevé du déplacement des éléments d'obturation 40,60 en fonction de la force appliquée à la poignée électronique 1 consistant en une composante horizontale.**

| **Force (N)** | **Déplacement du deuxième élément d'obturation (mm)** | **Tension générée par la première cellule photoélectrique (mV)** | **Tension générée par la deuxième cellule photoélectrique (mV)** |
|---|---|---|---|
| 5 | 0,01 | 557,4 | 760,1 |
| 10 | 0,03 | 557,8 | 752,2 |
| 15 | 0,04 | 557,0 | 743,6 |
| 20 | 0,05 | 556,3 | 735,0 |
| 30 | 0,08 | 559,5 | 632,8 |

De même le tableau 2 montre bien un déplacement du **deuxième élément d'obturation** présentant une fonction sensiblement linéaire par rapport à la force appliquée selon une composante horizontale. Au contraire, le déplacement du deuxième élément d'obturation n'est pas significativement impacté par une composante verticale. Au contraire, le premier élément d'obturation n'est pas significativement impacté par une composante horizontale. Ce déplacement se traduit par une modification linéaire de la tension générée par la deuxième cellule photoélectrique (R² > 0,999 avec une équation du premier degré) alors que la tension générée par la deuxième cellule photoélectrique présente un écart type inférieur à 1 %.

La présence de deux cellules photoélectrique et leur agencement de façon à ce qu'elle mesure des composantes de direction perpendiculaire permet une calibration sans intervention manuelle sur la poignée électronique et son électronique. Ainsi constitué, le système, peu couteux, a deux avantages par rapport aux autres systèmes : i) il permet d'acquérir des mesures indépendantes et ii) les mesures sont auto-calibrées, puisqu'un 'zéro' peut être obtenu lorsque aucune force ne s'applique sur le système et la force appliquée mesurée peut alors avantageusement correspondre à un pourcentage de déplacement de l'élément d'obturation par rapport à un déplacement maximum.

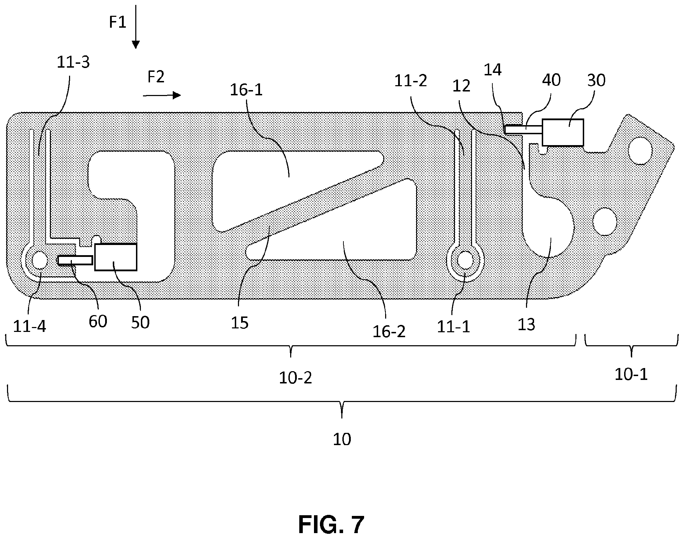

Comme présenté en lien avec la **figure 7**, une poignée électronique 1 selon la présente invention est agencée de façon à permettre la mesure d'au moins deux composantes d'une force lui étant appliquée.

Pour cela, chacune des poignées électroniques 1 comporte avantageusement une pièce centrale 10 comprenant une première cellule photoélectrique 30, un premier élément d'obturation 40, une deuxième cellule photoélectrique 50 et un deuxième élément d'obturation 60.

Comme déjà en partie détaillé en lien avec les figures 1 à 6, les éléments d'obturation 40, 60 sont agencés de façon à pouvoir, en fonction de leur position par rapport à leur cellule photoélectrique 30, 50 respective, modifier la quantité de photons reçue par le récepteur 32,52.

Dans ce mode de réalisation, la première cellule photoélectrique 30 et le premier élément d'obturation 40 sont agencés de façon à ce qu'une force appliquée à la poignée électronique 1 comportant une première composante apte à déplacer au moins en partie la pièce centrale 10, soit apte à entrainer une modification de la quantité de photons reçue par le premier récepteur, la modification étant proportionnelle à une première composante de la force ayant été appliquée à la poignée électronique 1.

En outre, la deuxième cellule photoélectrique 50 comporte une deuxième diode 51 apte à émettre un faisceau lumineux et un deuxième récepteur 52 agencé pour recevoir ledit faisceau lumineux. La deuxième cellule photoélectrique 50 est configurée pour générer un courant proportionnel (tension ou intensité proportionnelle) à une quantité de photons reçue par le deuxième récepteur 52.

Le deuxième élément d'obturation 60 est capable, en fonction de sa position par rapport à la deuxième cellule photoélectrique 50, de modifier la quantité de photons reçue par le deuxième récepteur 52.

En outre, la deuxième cellule photoélectrique 50 et le deuxième élément d'obturation 60 sont agencés de façon à ce qu'une force appliquée à la poignée électronique 1 comportant une deuxième composante apte à déplacer au moins en partie la pièce centrale 10, soit apte à entrainer une modification de la quantité de photons reçue par le deuxième récepteur 52, ladite modification étant proportionnelle à une deuxième composante de la force ayant été appliquée à la poignée électronique 1.

Il est ainsi possible de déterminer au moins deux composantes d'une force appliquée à chacune des deux poignées et provoquant directement un déplacement (une déformation au moins partielle) de la pièce centrale 10. Les deux poignées électroniques 1 peuvent ainsi être configurées pour commander un moteur équipant l'appareil d'assistance à la marche en fonction des valeurs des deux composantes de force calculées.

A titre d'exemple non limitatif, la commande du moteur peut générer un déplacement d'un dispositif motorisé tel qu'un appareil d'assistance à la marche. Une telle commande peut être soumise à la détermination des valeurs des deux composantes d'une force appliquée et calculées respectivement pour les deux poignées.

Afin de permettre une indépendance des mesures entre les deux composantes d'une force appliquée F2 (par exemple horizontale) sur chacune des poignées électroniques 1, ces dernières (et en particulier la position des cellules photoélectrique et des éléments d'obturation) peuvent être agencées de façon à ce que la première composante de la force appliquée F2 à la poignée électronique 1, ne soit pas apte à entrainer une modification de la quantité de photons reçue au niveau de la deuxième cellule photovoltaïque 50 mais uniquement au niveau de la première cellule photovoltaïque 30.

De même, chacune des poignées électroniques 1 peut également être configurée de façon à ce que la force appliquée F1 à la poignée électronique 1, comportant une deuxième composante perpendiculaire à la première composante, ne soit pas apte à entrainer une modification de la quantité de photons reçue au niveau de la première cellule photovoltaïque 30 mais uniquement au niveau de deuxième cellule photovoltaïque 50.

En outre, la pièce centrale 10 peut comporter une région d'attache 10-1 à un dispositif motorisé tel qu'un appareil d'assistance à la marche selon la présente invention ainsi qu'une région d'appui 10-2.

La région d'attache 10-1 peut consister en un prolongement longitudinal de la région d'appui 10-2 et peut comprendre une pluralité de logements, tels que par exemple une pluralité de pas de vis, adaptés pour recevoir des éléments de fixation, tels qu'à titre d'exemple non limitatifs une pluralité de vis, permettant de relier la poignée électronique 10 à l'appareil d'assistance à la marche.

La région d'appui 10-2 est adaptée pour permettre à un utilisateur de prendre appui sur celle-ci lorsque l'utilisateur interagit avec le dispositif motorisé ou l'appareil d'assistance à la marche. Ainsi, dans ce mode de réalisation, c'est la partie centrale 10 qui subit directement une déformation lors de l'application d'une force exercée par l'utilisateur.

Afin de fournir des mesures indépendantes dans au moins deux dimensions, c'est-à-dire afin de mesurer au moins deux composantes d'une force appliquée sur la poignée électronique 1 de manière indépendante, la région d'appui 10-2 de la pièce centrale 10 peut avantageusement comprendre au moins une poutre encastrée et un pont de déformation.

La poutre encastrée comprend avantageusement une extrémité encastrée 11-2, 11-3 et une extrémité libre 11-1, 11-4. L'extrémité encastrée 11-2, 11-3 est reliée à la pièce centrale tandis que l'extrémité libre 11-1, 11-4 présente un degré de liberté autorisant un déplacement de ladite extrémité libre lors de l'application d'une force sur la poignée électronique 1. De façon avantageuse, les poutres encastrées sont agencées de façon à disposer d'un degré de liberté lors de l'application d'une force F2 selon une première composante mais à ne pas disposer de degré de liberté lors de l'application d'une force F2 selon une seconde composante perpendiculaire à la première composante.

A titre d'exemple illustratif, l'extrémité libre 11-1, 11-4 peut présenter un degré de liberté selon un axe spécifique tel que l'axe de l'une des composantes de la force appliquée. Cela permet ainsi de ne générer un déplacement de l'extrémité libre 11-1, 11-4 que si la force appliquée présente une composante donnée non nulle. Par exemple, l'extrémité libre 11-1, 11-4 peut présenter un degré de liberté autorisant un déplacement de ladite extrémité libre selon l'axe de la deuxième composante de la force appliquée, ladite deuxième composante de la force appliquée pouvant correspondre à une composante horizontale F2.

De manière préférée, la région d'appui 10-2 de la pièce centrale 10 peut avantageusement comprendre au moins deux poutres encastrées, préférentiellement agencées aux extrémités, selon un axe longitudinal, de la pièce centrale 10.

En outre, un pont de déformation de la pièce centrale 10 peut comprendre une ouverture traversante 12 débouchant sur un évidement 13. L'ouverture traversante 12 est agencée pour pouvoir subir une déformation élastique lors de l'application d'une force sur la poignée électronique 1. Plus particulièrement, le volume de l'ouverture traversante 12 peut augmenter ou diminuer en fonction de l'application de la force sur la poignée électronique 1.

A titre d'exemple illustratif, l'ouverture traversante 12 peut être agencée de façon à ce que son volume varie seulement lors de l'application d'une force comportant une composante particulière. Cela permet de ne générer une augmentation ou une diminution du volume de l'ouverture traversante 12, par un déplacement de la partie centrale 10 et plus particulièrement de la région d'appui 10-2, que si la force appliquée présente une composante donnée non nulle (e.g. composante verticale).

Ainsi, l'augmentation ou la diminution du volume de l'ouverture traversante 12 peut être générée selon un axe spécifique d'une force appliquée, tel que l'axe de l'une des composantes de la force appliquée. Par exemple, l'ouverture traversante 12 peut être agencée de sorte à autoriser un déplacement de la région d'appui 10-2, et donc une augmentation ou une diminution du volume de l'ouverture traversante 12 selon l'axe de la première composante de la force appliquée, ladite première composante de la force appliquée pouvant correspondre à une composante verticale F1.

Avantageusement, la deuxième cellule photoélectrique 50 peut être fixée à la pièce centrale 10, au sein d'une cavité adaptée. Le deuxième élément d'obturation 60 sera dans ce cas fixé directement à une extrémité libre 11-1, 11-4 d'une poutre encastrée. En effet, l'application d'une force sur la région d'appui 10-2, si elle est suffisante, induira une déformation élastique de la pièce centrale 10. Une telle déformation pourra être mesurée si la deuxième composante de la force appliquée est non nulle, entrainant une modification de la quantité de photons reçue par le deuxième récepteur 52. En effet, la déformation élastique entraînera un déplacement du deuxième élément d'obturation 60 fixé à l'extrémité libre 11-1, 11-4 selon l'axe de la deuxième composante de la force appliquée bloquant ainsi tout ou partie du faisceau lumineux reçu par le récepteur 52 et généré par la diode 51.

Afin de mesurer la première composante de la force appliquée sur la région d'appui 10-2, la première cellule photoélectrique 30 et le premier élément d'obturation 40 peuvent respectivement être positionnés de part et d'autre de l'ouverture traversante 12 du pont de déformation. En effet, l'application d'une force sur la région d'appui 10-2, si elle est suffisante, induira une déformation élastique de la pièce centrale 10. Une telle déformation pourra être mesurée si la première composante de la force appliquée est non nulle, entrainant une modification de la quantité de photons reçue par le premier récepteur 32. En effet, la déformation élastique entrainera un déplacement du premier élément d'obturation 40 fixé sur la pièce centrale 10, plus particulièrement dans un logement 14 adapté, selon l'axe de la première composante de la force appliquée bloquant ainsi tout ou partie du faisceau lumineux reçu par le récepteur 32 et généré par la diode 31.

Afin de diminuer le poids de la pièce centrale 10 et de réduire l'apparition de précontraintes au niveau au pont de déformation, la pièce centrale 10 peut comporter au moins deux ouvertures centrales 16-1,16-2 parcourues par une partie 15 de la pièce centrale, lesdites ouvertures centrales étant positionnées entre l'au moins une poutre encastrée 11-2, 11-3 et le pont de déformation.

Lorsque la pièce centrale 10 comprend deux poutres encastrées 11-2, 11-3, les deux ouvertures centrales 16-1, 16-2 sont positionnées entre lesdites poutres encastrées.

De telles précontraintes peuvent générer une déformation élastique du pont de déformation et potentiellement une modification de la quantité de photons reçue par le premier récepteur 32.

Comme décrit précédemment, chacune des poignées électroniques 1 peut comprendre une enveloppe extérieure 20, ladite enveloppe extérieure 20 étant couplée et/ou fixée à la pièce centrale 10. De façon préférée, l'enveloppe extérieure 20 n'est pas fixée à pièce centrale 10 mais est seulement couplée par exemple par un ou plusieurs éléments de transmission de force.

Pour cela, un ou plusieurs éléments de transmission de force de l'enveloppe extérieure 20 sont agencés de façon à traverser un logement pratiqué dans l'extrémité libre 11-1, 11-4 de la poutre encastrée 11-2, 11-3. Un élément de transmission de force peut par exemple correspondre à une vis, un tube, un cylindre, comme une goupille liant les deux parties de l'enveloppe extérieure 20 et traversant la pièce centrale 10 dans des logements pratiqué dans l'extrémité libre 11-1, 11-4 de la poutre encastrée 11-2, 11-3.

De préférence, en l'absence de force appliquée à la poignée électronique, l'élément de transmission de force n'est pas en contact directe ou indirecte de la pièce centrale. De façon préférée, le logement pratiqué dans l'extrémité libre 11-1, 11-4 de la poutre encastrée 11-2, 11-3 comporte un élément, tel qu'une goupille, ayant un ajustement avec jeu. L'enveloppe extérieure 20 transmets de préférence les efforts extérieurs à la pièce centrale 10 par les goupilles traversant la pièce centrale en ses parties 11-1 et 11-4, ayant un ajustement avec jeu. En particulier, les goupilles peuvent correspondre à des cylindres en métal traversant la partie centrale 10 au niveau de l'extrémité libre 11-1 et 11 -4 et venant se loger dans la partie extérieure 20. Ces goupilles sont avantageusement montées avec un jeu de façon à tourner librement, elles ne transmettent donc que des forces de la partie extérieure à la partie centrale.

Un tel élément de transmission de force permet d'éviter les efforts de torsion qui peuvent parasiter les mesures lors de l'application d'une force par un utilisateur. Ainsi, un tel arrangement permet d'améliorer la justesse de la mesure et en particulier sa linéarité.

La poignée peut également comporter un élément de fixation tel qu'une vis traversant la pièce centrale 10 dans les cavités 16-1 et 16-2.

La présente invention porte sur un **dispositif motorisé** tel qu**'un appareil d'assistance à la marche,** équipé d'au moins une, de préférence d'au moins deux, poignées électronique 1 selon l'invention. De façon préférée, l'appareil d'assistance à la marche peut être sélectionné parmi : une canne, une béquille, un déambulateur, un déambulateur motorisé et un fauteuil motorisé.

En outre, un appareil d'assistance à la marche selon l'invention sera équipé d'au moins un moteur et ledit moteur sera configuré de façon à pouvoir être contrôlé au moins en partie en fonction d'une valeur d'une composante de force calculée par une poignée selon l'invention. Ainsi, **selon un autre aspect préféré,** la présente invention porte sur **un procédé 100** de contrôle d'un appareil d'assistance à la marche.

Un procédé comporte en particulier un calcul d'une valeur d'au moins une composante d'une force appliquée à une poignée électronique 1 selon l'invention.

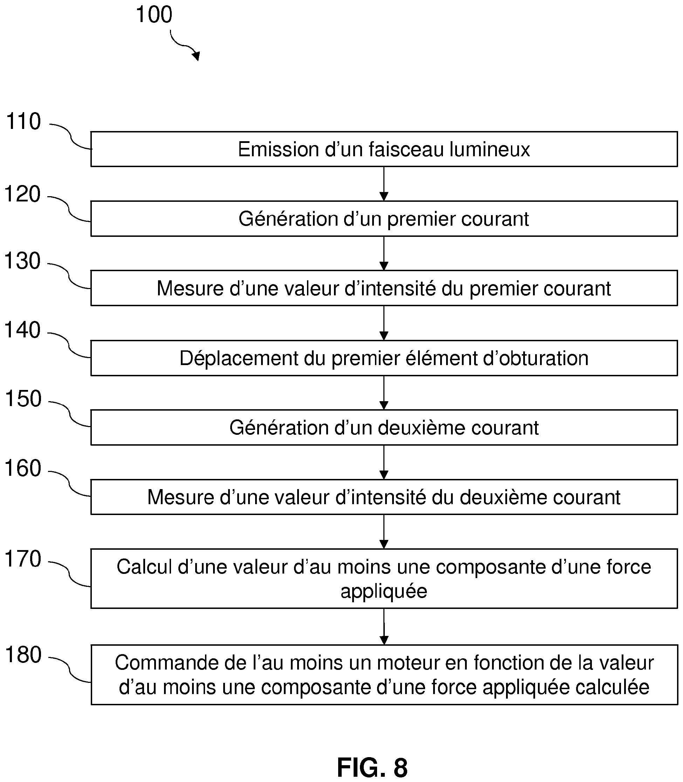

Comme illustré à la **figure 8**, le procédé peut débuter par l'émission 110 d'un faisceau lumineux par la première diode 31.

Ce faisceau lumineux, s'il est reçu par le premier récepteur 32, c'est-à-dire que l'élément d'obturation 40 n'a pas complètement bloqué le faisceau alors il y aura génération 120 d'un premier courant proportionnel à une quantité de photons reçue par le premier récepteur 32. Le procédé peut ensuite comporter une mesure 130 d'une valeur d'intensité ou de tension du premier courant. Cette mesure peut par exemple être réalisée par une carte électronique 80 puis traduite en information numérique.

Lorsque le premier élément d'obturation 40 va se déplacer 140 sous l'effet d'une force appliquée à ladite poignée électronique 1 alors il pourra réduire la quantité de photons reçue par le premier récepteur 32.

Ainsi, il y aura génération 150 d'un deuxième courant proportionnel (e.g. d'intensité ou de tension proportionnelle) à une quantité de photons reçue par le premier récepteur 32 puis une mesure 160 d'une valeur d'intensité ou de tension du deuxième courant par exemple par une carte électronique.

Le procédé pourra alors comporter une étape de calcul 170 d'une valeur d'au moins une composante d'une force appliquée à partir des valeurs d'intensité ou de tension du premier courant et du deuxième courant. Ce calcul pourra par exemple être réalisé par un processeur, de préférence couplé à une mémoire. L'étape 170 peut en particulier correspondre au calcul d'une valeur de différence entre les valeurs d'intensité ou de tension du premier courant et du deuxième courant, ladite différence entre les valeurs d'intensité ou de tension du premier courant et du deuxième courant étant proportionnelle à une première composante de la force ayant été appliquée à la poignée électronique 1.

Ainsi, le procédé permet de déterminer une valeur de deux composantes d'une force.

Cette valeur pourra ensuite être utilisée pour commander 180 au moins un des moteurs de l'appareil d'assistance à la marche. Cette commande pourra par exemple être réalisée par un module de commande comportant des moyens agencés et configurés pour exécuter cette fonction.

La commande pourra par exemple comporter une transmission d'une instruction de commande à un servomoteur ou une modification de valeur courant transmis à un moteur.

La mise en oeuvre de l'invention permet donc de contrôler un dispositif robotisé à partir de composants simples, robustes et peu couteux.

Du fait de ces avantages, il est par exemple possible de réaliser des appareils d'assistance à la marche capables de mesurer l'interaction d'un utilisateur avec l'appareil et d'en déduire des instructions de déplacement. Cela est possible en particulier grâce aux poignées électroniques selon l'invention jouant le rôle d'interface homme machine entre l'utilisateur et l'appareil d'assistance à la marche.

## Revendications

1. Appareil d'assistance à la marche comportant au moins un moteur, au moins une poignée électronique (1), l'au moins une poignée électronique (1) étant agencée de façon à permettre la mesure d'au moins deux composantes d'une force lui étant appliquée, ladite poignée électronique (1) étant **caractérisée en ce qu'**elle comprend :
- une première cellule photoélectrique (30), ladite première cellule photoélectrique (30) comportant une première diode (31) apte à émettre un faisceau lumineux et un premier récepteur (32) agencé pour recevoir ledit faisceau lumineux, ladite première cellule photoélectrique (30) étant configurée pour générer un courant proportionnel à une quantité de photons reçue par le premier récepteur (32), et
- un premier élément d'obturation (40) capable, en fonction de sa position par rapport à la première cellule photoélectrique (30), de modifier la quantité de photons reçue par le premier récepteur (32),
- la première cellule photoélectrique (30) et le premier élément d'obturation (40) étant agencés de façon à ce que la force appliquée à la poignée électronique (1) soit apte à entrainer une modification de la quantité de photons reçue par le premier récepteur (32), ladite modification étant proportionnelle à une première composante (F1) de la force ayant été appliquée à la poignée électronique (1).
- une deuxième cellule photoélectrique (50) comportant une deuxième diode (51) apte à émettre un faisceau lumineux et un deuxième récepteur (52) agencé pour recevoir ledit faisceau lumineux, ladite deuxième cellule photoélectrique (50) étant configurée pour générer un courant proportionnel à une quantité de photons reçue par le deuxième récepteur (52),
- un deuxième élément d'obturation (60) capable, en fonction de sa position par rapport à la deuxième cellule photoélectrique (50), de modifier la quantité de photons reçue par le deuxième récepteur (52),
- la deuxième cellule photoélectrique (50) et le deuxième élément d'obturation (60) étant agencé de façon à ce que la force appliquée à la poignée électronique (1), soit apte à entrainer une modification de la quantité de photons reçue par le deuxième récepteur (52), ladite modification étant proportionnelle à une deuxième composante (F2) de la force ayant été appliquée à la poignée électronique (1),
- une pièce centrale (10) sur laquelle sont fixés la première cellule photoélectrique (30), le premier élément d'obturation (40), la deuxième cellule photoélectrique (50) et le deuxième élément d'obturation (60),
ladite poignée électronique (1) étant configurée pour commander ledit moteur en fonction des valeurs des deux composantes de force calculées, et
agencée de façon à ce qu'une force, adaptée à la commande de l'appareil d'assistance à la marche, appliquée à la poignée électronique (1) soit apte à déformer au moins en partie la pièce centrale (10).

2. Appareil d'assistance à la marche selon la revendication 1, **caractérisé en ce qu'**il comporte deux poignées électroniques (1).

3. Appareil d'assistance à la marche selon l'une des revendications 1 ou 2, **caractérisé en ce que** les deux composantes (F1, F2), desquelles sont dépendantes les modifications des quantités de photons reçues par les récepteurs, sont des composantes présentant des directions respectivement perpendiculaires.

4. Appareil d'assistance à la marche selon l'une des revendications 1 à 3, **caractérisé en ce que** la poignée électronique (1) est configurée de façon à ce que la première composante (F1) et la deuxième composante (F2) de la force appliquée à la poignée électronique (1), ne soient pas aptes à entrainer une modification significative de la quantité de photons reçue par le deuxième récepteur (52) et par le premier récepteur (32) respectivement.

5. Appareil d'assistance à la marche selon l'une quelconque des revendications 1 à 4, **caractérisé en ce que** la pièce centrale (10) comprend au moins une poutre encastrée (11-2, 11-3) comprenant une extrémité encastrée et une extrémité libre (11-1, 11-4), ladite extrémité libre (11-1, 11-4) présentant un degré de liberté selon la direction de la deuxième composante (F2) de la force appliquée.

6. Appareil d'assistance à la marche selon la revendication 5, **caractérisé en ce que** l'extrémité libre (11-1, 11-4) ne présente pas de degré de liberté selon la direction de la première composante (F1) de la force appliquée.

7. Appareil d'assistance à la marche selon l'une des revendications 5 ou 6, **caractérisé en ce que** la deuxième cellule photoélectrique (50) est fixée à la pièce centrale (10), au sein d'une cavité adaptée et le deuxième élément d'obturation (60) est fixé à l'extrémité libre (11-1, 11-4) de la poutre encastrée.

8. Appareil d'assistance à la marche selon l'une quelconque des revendications 5 à 7, **caractérisé en ce que** la poignée électronique (1) comprend une enveloppe extérieure (20) couplée à la pièce centrale (10) via au moins un élément de transmission de force agencé pour traverser un logement pratiqué dans l'extrémité libre (11-1,11-4) de l'au moins une poutre encastrée (11-2, 11-3).

9. Appareil d'assistance à la marche selon la revendication 8, **caractérisé en ce que** l'élément de transmission de force est agencé pour ne pas être en contact directe ou indirecte avec la pièce centrale en absence de force appliquée à la poignée électronique (1), de préférence l'élément de transmission de force présente un ajustement avec jeu au niveau du logement pratiqué dans l'extrémité libre (11-1,11-4).

10. Appareil d'assistance à la marche selon l'une quelconque des revendications 1 à 9, **caractérisé en ce que** la pièce centrale (10) comprend un pont de déformation comprenant une ouverture traversante (12) débouchant sur un évidement (13), ladite ouverture traversante (12) étant agencée pour subir une déformation élastique fonction de la première composante (F1) de la force appliquée.

11. Appareil d'assistance à la marche selon la revendication 10, **caractérisé en ce que** la première cellule photoélectrique (30) et le premier élément d'obturation (40) sont respectivement positionnés de part et d'autre de l'ouverture traversante (12) du pont de déformation.

12. Appareil d'assistance à la marche selon l'une quelconque des revendications 1 à 11, **caractérisée en ce que** la pièce centrale (10) est constituée d'un matériau présentant un module de Young supérieur ou égale à 60 GPa.

13. Appareil d'assistance à la marche selon l'une quelconque des revendications 1 à 12, **caractérisé en ce que** ledit appareil d'assistance à la marche est sélectionné parmi : une canne motorisée, une béquille motorisée, un déambulateur motorisé, un déambulateur avec fonction de levage et un fauteuil motorisé.

14. Procédé (100b) de contrôle d'un appareil d'assistance à la marche selon l'une quelconque des revendications 1 à 13, ledit procédé (100) comportant une mesure des valeurs d'au moins deux composantes d'une force appliquée à une poignée électronique (1), ladite poignée électronique (1) comprenant une première cellule photoélectrique (30) comportant une première diode (31) et un premier récepteur (32), et un premier élément d'obturation (40) et une deuxième cellule photoélectrique (50) comportant une deuxième diode (51) et un deuxième récepteur (52), et un deuxième élément d'obturation (60), ladite mesure d'une valeur d'au moins deux composantes d'une force appliquée à ladite poignée électronique comportant les étapes suivantes :
- Emission (110b) d'un faisceau lumineux par les première diode (31) et deuxième diode (51),
- Génération de premiers courants (120b) proportionnels respectivement à une quantité de photons reçue par les premier récepteur (32) et deuxième récepteur (52) respectivement,
- Mesure (130b) des valeurs des premiers courants,
- Déplacement (140b) du premier élément d'obturation (40) et/ou du deuxième élément d'obturation (60) sous l'effet d'une force appliquée à ladite poignée électronique (1),
- Génération de deuxièmes courants (150b) proportionnels à une quantité de photons reçue par les premier récepteur (32) et deuxième récepteur (52) respectivement,
- Mesure des valeurs des deuxièmes courants (160b), et
- Calcul des valeurs d'au moins deux composantes (170b) de la force appliquée à la poignée électronique (1) à partir des valeurs des premiers courants et des deuxièmes courants ;
ledit procédé (100b) comportant en outre une étape de commande (180) de l'au moins un moteur en fonction des valeurs calculées des au moins deux composantes de la force appliquée à la poignée électronique (1).

## Patentansprüche

1. Gehhilfe mit mindestens einem Motor, mindestens einem elektronischen Griff (1), worin der mindestens eine elektronische Griff (1) so angeordnet ist, dass er die Erfassung von mindestens zwei Komponenten einer auf ihn ausgeübten Kraft ermöglicht, worin der elektronische Griff (1) **dadurch gekennzeichnet ist, dass** er umfasst:
eine erste Fotozelle (30), worin die erste Fotozelle (30) eine erste Diode (31), die einen Lichtstrahl aussenden kann, und einen ersten Empfänger (32) umfasst, der angeordnet ist, den Lichtstrahl zu empfangen, worin die erste Fotozelle (30) konfiguriert ist, einen Strom zu erzeugen, der proportional zu einer Menge von Photonen ist, die von dem ersten Empfänger (32) empfangen werden, und
ein erstes Verschlusselement (40), das in Abhängigkeit von seiner Position in Bezug auf die erste Fotozelle (30) die Menge der vom ersten Empfänger (32) empfangenen Photonen ändern kann,
worin die erste Fotozelle (30) und das erste Verschlusselement (40) so angeordnet sind, dass die auf den elektronischen Griff (1) ausgeübte Kraft geeignet ist, eine Änderung der vom ersten Empfänger (32) empfangenen Photonenmenge zu bewirken, worin die Änderung proportional zu einer ersten Komponente (F1) der Kraft ist, die auf den elektronischen Griff (1) ausgeübt wurde,
eine zweite Fotozelle (50) mit einer zweiten Diode (51), die einen Lichtstrahl aussenden kann, und einem zweiten Empfänger (52), der so angeordnet ist, dass er den Lichtstrahl empfängt, worin die zweite Fotozelle (50) konfiguriert ist, einen Strom zu erzeugen, der proportional zu einer Menge von Photonen ist, die von dem zweiten Empfänger (52) empfangen werden,
ein zweites Verschlusselement (60), das in Abhängigkeit von seiner Position in Bezug auf die zweite Fotozelle (50) die Menge der vom zweiten Empfänger (52) empfangenen Photonen ändern kann,
worin die zweite Fotozelle (50) und das zweite Verschlusselement (60) so angeordnet sind, dass die auf den elektronischen Griff (1) ausgeübte Kraft eine Änderung der Menge der vom zweiten Empfänger (52) empfangenen Photonen bewirken kann, worin die Änderung proportional zu einer zweiten Komponente (F2) der Kraft ist, die auf den elektronischen Griff (1) ausgeübt wurde,
ein Mittelstück (10), an dem die erste Fotozelle (30), das erste Verschlusselement (40), die zweite Fotozelle (50) und das zweite Verschlusselement (60) befestigt sind,
worin der elektronische Griff (1) konfiguriert ist, den Motor in Abhängigkeit von den Werten der beiden berechneten Kraftkomponenten zu steuern, und
so angeordnet ist, dass eine Kraft, die an die Steuerung der Gehhilfe angepasst ist und auf den elektronischen Griff (1) ausgeübt wird, geeignet ist, das Mittelstück (10) zumindest teilweise zu verformen.

2. Gehhilfe nach Anspruch 1, **dadurch gekennzeichnet, dass** diese zwei elektronische Griffe (1) aufweist.

3. Gehhilfe nach einem der Ansprüche 1 oder 2, **dadurch gekennzeichnet, dass** die beiden Komponenten (F1, F2), von denen die Änderungen der von den Empfängern empfangenen Photonenmengen abhängen, Komponenten sind, die jeweils senkrechte Richtungen aufweisen.

4. Gehhilfe nach einem der Ansprüche 1 bis 3, **dadurch gekennzeichnet, dass** der elektronische Griff (1) so konfiguriert ist, dass die erste Komponente (F1) und die zweite Komponente (F2) der auf den elektronischen Griff (1) ausgeübten Kraft nicht geeignet sind, eine signifikante Änderung der Menge der vom zweiten Empfänger (52) bzw. vom ersten Empfänger (32) empfangenen Photonen zu bewirken.

5. Gehhilfe nach einem der Ansprüche 1 bis 4, **dadurch gekennzeichnet, dass** das Mittelstück (10) mindestens einen eingebetteten Träger (11-2, 11-3) mit einem eingebetteten Ende und einem freien Ende (11-1, 11-4) umfasst, worin das freie Ende (11-1, 11-4) einen Freiheitsgrad in Richtung der zweiten Komponente (F2) der aufgebrachten Kraft aufweist.

6. Gehhilfe nach Anspruch 5, **dadurch gekennzeichnet, dass** das freie Ende (11-1, 11-4) keinen Freiheitsgrad entlang der Richtung der ersten Komponente (F1) der aufgebrachten Kraft aufweist.

7. Gehhilfe nach einem der Ansprüche 5 oder 6, **dadurch gekennzeichnet, dass** die zweite Fotozelle (50) am Mittelstück (10) innerhalb eines passenden Hohlraums befestigt ist und das zweite Verschlusselement (60) am freien Ende (11-1, 11-4) des eingebetteten Trägers befestigt ist.

8. Gehhilfe nach einem der Ansprüche 5 bis 7, **dadurch gekennzeichnet, dass** der elektronische Griff (1) eine äußere Hülle (20) umfasst, die über mindestens ein Kraftübertragungselement mit dem Mittelstück (10) gekoppelt ist, das so angeordnet ist, dass es durch eine praktische Aussparung im freien Ende (11-1, 11-4) des mindestens einen eingelassenen Trägers (11-2, 11-3) verläuft.

9. Gehhilfe nach Anspruch 8, **dadurch gekennzeichnet, dass** das Kraftübertragungselement angeordnet ist, bei Abwesenheit einer auf den elektronischen Griff (1) ausgeübten Kraft nicht in direktem oder indirektem Kontakt mit dem Mittelstück zu stehen, worin das Kraftübertragungselement vorzugsweise eine Spielpassung an der praktischen Aufnahme im freien Ende (11-1, 11-4) aufweist.

10. Gehhilfe nach einem der Ansprüche 1 bis 9, **dadurch gekennzeichnet, dass** das Mittelstück (10) eine Verformungsbrücke mit einer Durchgangsöffnung (12) umfasst, die in eine Aussparung (13) mündet, worin die Durchgangsöffnung (12) so angeordnet ist, dass sie eine elastische Verformung erfährt, die von der ersten Komponente (F1) der aufgebrachten Kraft abhängig ist.

11. Gehhilfe nach Anspruch 10, **dadurch gekennzeichnet, dass** die erste Fotozelle (30) und das erste Verschlusselement (40) entsprechend auf einer und der anderen Seite der Durchgangsöffnung (12) der Verformungsbrücke angeordnet sind.

12. Gehhilfe nach einem der Ansprüche 1 bis 11, **dadurch gekennzeichnet, dass** das Mittelstück (10) aus einem Material mit einem Elastizitätsmodul von 60 GPa oder mehr besteht.

13. Gehhilfe nach einem der Ansprüche 1 bis 12, **dadurch gekennzeichnet, dass** die Gehhilfe ausgewählt ist aus einem motorisierten Gehstock, einer motorisierten Gehstütze, einem motorisierten Rollator, einem Rollator mit Hebefunktion und einem motorisierten Rollstuhl.

14. Verfahren (100b) zur Steuerung einer Gehhilfe nach einem der Ansprüche 1 bis 13, wobei das Verfahren (100) eine Erfassung der Werte von mindestens zwei Komponenten einer Kraft umfasst, die auf einen elektronischen Griff (1) ausgeübt wird, worin der elektronische Griff (1) umfasst: eine erste Fotozelle (30) mit einer ersten Diode (31) und einem ersten Empfänger (32), ein erstes Verschlusselement (40) und eine zweite Fotozelle (50) mit einer zweiten Diode (51) und einem zweiten Empfänger (52) und einem zweiten Verschlusselement (60), wobei das Messen eines Wertes von mindestens zwei Komponenten einer auf den elektronischen Griff ausgeübten Kraft die Schritte umfasst:
- Aussenden (110b) eines Lichtstrahls durch die erste Diode (31) und die zweite Diode (51),
- Erzeugen erster Ströme (120b), die jeweils proportional zu einer Menge von Photonen sind, die von dem ersten Empfänger (32) bzw. dem zweiten Empfänger (52) empfangen werden,
- Erfassen (130b) der Werte der ersten Ströme,
- Versetzen (140b) des ersten Verschlusselements (40) und/oder des zweiten Verschlusselements (60) unter einer Kraft, die auf den elektronischen Griff (1) ausgeübt wird,
- Erzeugen von zweiten Strömen (150b), die proportional zu einer Menge von Photonen sind, die von dem ersten Empfänger (32) bzw. dem zweiten Empfänger (52) empfangen wurden,
- Erfassen der Werte der zweiten Ströme (160b), und
- Berechnen der Werte von mindestens zwei Komponenten (170b) der auf den elektronischen Griff (1) ausgeübten Kraft aus den Werten der ersten Ströme und der zweiten Ströme;
wobei das Verfahren (100b) zudem einen Schritt des Steuerns (180) des mindestens einen Motors in Abhängigkeit von den berechneten Werten der mindestens zwei Komponenten der auf den elektronischen Griff (1) ausgeübten Kraft umfasst.

## Claims

1. Apparatus for assisting with walking comprising at least one motor, at least one electronic handle (1), the at least one electronic handle (1) being arranged so as to permit the measurement of at least two components of a force being applied thereto, said electronic handle (1) being **characterised in that** it comprises:
- a first photoelectric cell (30), said first photoelectric cell (30) comprising a first diode (31) able to transmit a light beam and a first receiver (32) arranged to receive said light beam, said first photoelectric cell (30) being configured to generate a current proportional to a quantity of photons received by the first receiver (32), and
- a first closing element (40) able, in dependence upon its position with respect to the first photoelectric cell (30), to modify the quantity of photons received by the first receiver (32),
- the first photoelectric cell (30) and the first closing element (40) being arranged such that the force applied to the electronic handle (1) is able to cause a modification in the quantity of photons received by the first receiver (32), said modification being proportional to a first component (F1) of the force having been applied to the electronic handle (1),
- a second photoelectric cell (50) comprising a second diode (51) able to transmit a light beam and a second receiver (52) arranged to receive said light beam, said second photoelectric cell (50) being configured to generate a current proportional to a quantity of photons received by the second receiver (52),
- a second closing element (60) able, in dependence upon its position with respect to the second photoelectric cell (50), to modify the quantity of photons received by the second receiver (52),
- the second photoelectric cell (50) and the second closing element (60) being arranged such that the force applied to the electronic handle (1) is able to cause a modification in the quantity of photons received by the second receiver (52), said modification being proportional to a second component (F2) of the force having been applied to the electronic handle (1),
- a central piece (10) on which the first photoelectric cell (30), the first closing element (40), the second photoelectric cell (50) and the second closing element (60) are fixed, said electronic handle (1) being configured to control said motor in dependence upon the values of the two calculated force components, and
arranged such that a force, adapted to the control of the apparatus for assisting with walking, applied to the electronic handle (1) is able to deform, at least in part, the central piece (10).

2. Apparatus for assisting with walking as claimed in claim 1, **characterised in that** it has two electronic handles (1).

3. Apparatus for assisting with walking as claimed in any one of claims 1 or 2, **characterised in that** the two components (F1, F2), upon which the modifications in the quantities of photons received by the receivers are dependent, are components having respectively perpendicular directions.

4. Apparatus for assisting with walking as claimed in any one of claims 1 to 3, **characterised in that** the electronic handle (1) is configured such that the first component (F1) and the second component (F2) of the force applied to the electronic handle (1) are not able to cause a significant modification in the quantity of photons received by the second receiver (52) and by the first receiver (32) respectively.

5. Apparatus for assisting with walking as claimed in any one of claims 1 to 4, **characterised in that** the central piece (10) comprises at least one fixed bar (11-2, 11-3) comprising a fixed end and a free end (11-1, 11-4), said free end (11-1, 11-4) having a degree of freedom in the direction of the second component (F2) of the applied force.

6. Apparatus for assisting with walking as claimed in claim 5, **characterised in that** the free end (11-1, 11-4) does not have a degree of freedom in the direction of the first component (F1) of the applied force.

7. Apparatus for assisting with walking as claimed in any one of claims 5 or 6, **characterised in that** the second photoelectric cell (50) is fixed to the central piece (10), within a suitable cavity and the second closing element (60) is fixed to the free end (11-1, 11-4) of the fixed bar.

8. Apparatus for assisting with walking as claimed in any one of claims 5 to 7, **characterised in that** the electronic handle (1) comprises an outer sleeve (20) coupled to the central piece (10) via at least one force-transmitting element arranged to pass through a hole formed in the free end (11-1, 11-4) of the at least one fixed bar (11-2, 11-3).

9. Apparatus for assisting with walking as claimed in claim 8, **characterised in that** the force-transmitting element is arranged not to be in direct or indirect contact with the central piece in the absence of a force applied to the electronic handle (1), preferably the force-transmitting element has a clearance fit with the hole formed in the free end (11-1, 11-4).

10. Apparatus for assisting with walking as claimed in any one of claims 1 to 9, **characterised in that** the central piece (10) comprises a deformation bridge comprising a through-opening (12) issuing into a recess (13), said through-opening (12) being arranged to be subjected to an elastic deformation in dependence upon the first component (F1) of the applied force.

11. Apparatus for assisting with walking as claimed in claim 10, **characterised in that** the first photoelectric cell (30) and the first closing element (40) are respectively positioned on either side of the through-opening (12) of the deformation bridge.

12. Apparatus for assisting with walking as claimed in any one of claims 1 to 11, **characterised in that** the central piece (10) is formed of a material having a Young's modulus greater than or equal to 60 GPa.

13. Apparatus for assisting with walking as claimed in any one of claims 1 to 12, **characterised in that** said apparatus for assisting with walking is selected from: a motorised walking stick, a motorised crutch, a motorised walker, a walker with a raising function and a motorised wheelchair.

14. Method (100b) for controlling an apparatus for assisting with walking as claimed in any one of claims 1 to 13, said method (100) comprising measuring the values of at least two components of a force applied to an electronic handle (1), said electronic handle (1) comprising a first photoelectric cell (30) comprising a first diode (31) and a first receiver (32), and a first closing element (40) and a second photoelectric cell (50) comprising a second diode (51) and a second receiver (52), and a second closing element (60), said measuring of a value of at least two components of a force applied to said electronic handle comprising the following steps:
- transmitting (110b) a light beam by the first diode (31) and the second diode (51),
- generating first currents (120b) respectively proportional to a quantity of photons received by the first receiver (32) and second receiver (52) respectively,
- measuring (130b) the values of the first currents,
- moving (140b) the first closing element (40) and or the second closing element (60) under the effect of a force applied to said electronic handle (1),
- generating second currents (150b) proportional to a quantity of photons received by the first receiver (32) and second receiver (52) respectively,
- measuring the values of the second currents (160b), and
- calculating the values of at least two components (170b) of the force applied to the electronic handle (1) from values of the first currents and second currents;
said method (100b) also comprising a step of controlling (180) the at least one motor in dependence upon the calculated values of the at least two components of the force applied to the electronic handle (1).
